# EUROPEAN PATENT APPLICATION

(11) **EP 2 108 819 A2**
(43) Date of publication of application: **14.10.2009**
(21) Application number: 09005086.5
(22) Date of filing: 07.04.2009
(51) Int. Cl.: F03D 1/06

(54) **Blade root extender**

(30) Priority: 09.04.2008 ES 200800996
(71) Applicant: Gamesa Innovation & Technology, S.L., 31612 Sarriguren Navarra (ES)
(72) Inventor: Aarhus, Karl, 8600 Silkeborg (DK)

(57) **Abstract**

The object of the invention is a blade root extender (2) for a wind turbine, hollow and with cylindrical form, mounted between a blade root and a hub fixed to the nacelle of the wind turbine. The blade root extender (2) consists of a concrete body and, optionally, one or two end flanges (6). Likewise it is preloaded by stud bolts (3) which compress the blade root extender between the blade and the hub. The concrete extender (2) is reinforced by discrete bars, grids of tentor steel (8, 9, and 10) or short fibre reinforcements.

## Description

### TECHNICAL FIELD

The invention relates to a horizontal shaft wind turbine (WT), which comprises a tower with a nacelle at its top, as well as a rotor which contains a hub, at least one blade and an extender between hub and blade root. The rotor is connected to a main shaft, which is connected to a gearbox, which is connected to a power generating generator. The main shaft may also be directly connected to the generator.

### BACKGROUND OF THE INVENTION

Blade root extenders are used to increase the rotor diameter of a Wind turbine generator (WTG) in order to use an existing blade on turbines situated in locations where the wind class is lower than the basic design wind class for the blade (and wind turbine). With an increased rotor diameter the WTG power production is increased.

A known design of an extender, which increases the blade length, is shown in W00142647. Further using an extender could facilitate a blade angle change, like in W003060319 where the angle between the tower axis and the rotor circular area is modified to avoid collision between blade tip and tower in case of strong winds. Also the blade angle in circumferential direction could be changed as seen in FR2863318. Such extenders have previously been made mainly as metallic parts only in the form a welded or cast design. Such extenders are having two bolt circles: one for the extender blade connection and another for the extender bearing (or hub) connection. The extenders therefore comprise two bolting flanges and a cylinder (spacer) between them. In principle this type of extender can also be made in composite materials as claimed in W00142647 such as glass fibre reinforced plastic or carbon fibre reinforced plastic.

Several WTG manufactures among other Nordtank and Gamesa have proposed/used a design with long stud bolts preloading two concentric cylinders. The bolts are in the one end connected to the blades and in the other end is clamping the bearing inner ring. The cylinders are manufactured from a rolled steel plate with a longitudinal weld.

Wind turbine blades and thus extenders are subjected to severe fatigue loading. If properly designed the use of pre-tensioned long bolts ensures that the extender is never itself subjected to tensile loading. This increases the fatigue strength of the extender significantly and thus in principle only the bolts need to be designed to accommodate the operational induced WTG fatigue loads. Hence a lighter extender design is achieved.

In order to keep the two concentric cylinders in place two end flanges are used. Different principles, e.g. welding, bolting or grooves exist for keeping the cylinders together with the end flanges.

The cylinders can be made from rolled steel plates or from GFRP/CFRP materials.

Due to the compression preload from the bolts the wall thickness of the cylinder is defined by either the buckling strength of the cylinders or the compressive strength of the material. In case buckling is not a problem this promotes the use of materials with a high compressive strength to density ratio.

### DESCRIPTION OF THE INVENTION

This invention relates to a cast extender which is subjected to a compressive preload imposed by a number of pre-tensioned bolts in a bolt circle. Concrete, fibre reinforced concrete, densit or short fibre reinforced densit material is the primary load carrying material and constituent material in the cast extender.

When the extender is only subjected to compressive loading it becomes natural to consider other materials such as concrete or high strength concrete (densit or similar material). The reason to consider these materials is twofold:
- On the one hand, the density is lower than the one of steel, turning out to a better strength to density ratio than for construction steel.
- On the other hand, the raw material cost per kg is lower or similar to the one of steel

### DESCRIPTION OF THE DRAWINGS

Figure 1 is a detailed view of the hub, blade bearing, extender, stud bolts and blade root assembly
Figure 2 shows the concrete cylinder geometry
Figure 3 is a partially detailed view of an extender and stud bolts
Figure 4 shows some examples of reinforcement
Figure 5 is a cross section of an extender assembly

### DESCRIPTION OF A PREFERRED EMBODIMENT

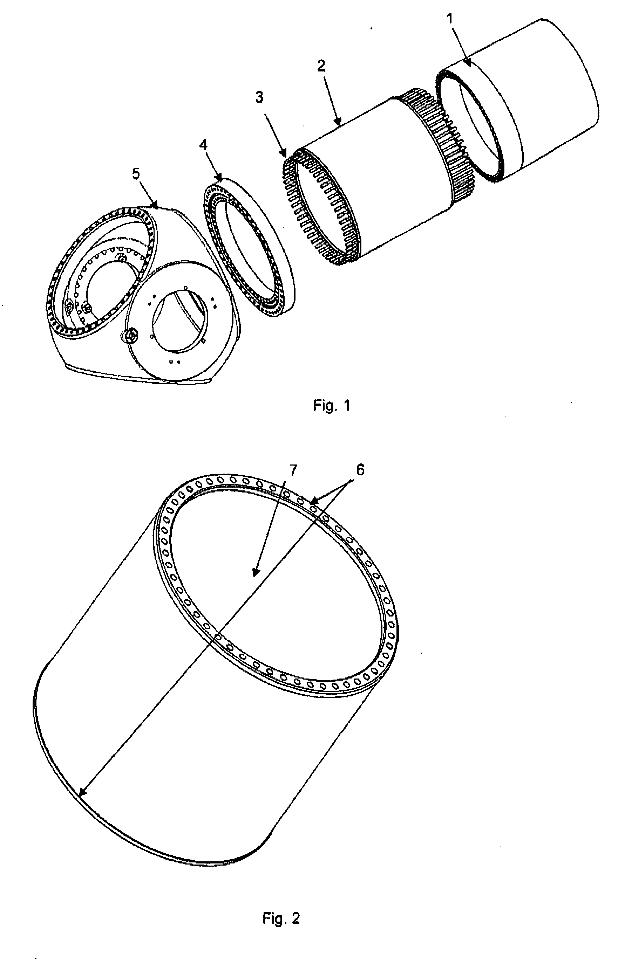

As shown in figure 1, the extender (2) is to be mounted against the blade root (1) end. In the other end of the blade root extender (2) the blade bearing (4) is attached. Under the rotating (pitching) blade bearing ring one or more structural pitch system components may also be mounted.

In Figure 2 an extender is shown comprising two metallic end flanges (6) and a hollow cylinder (7) made from densit.

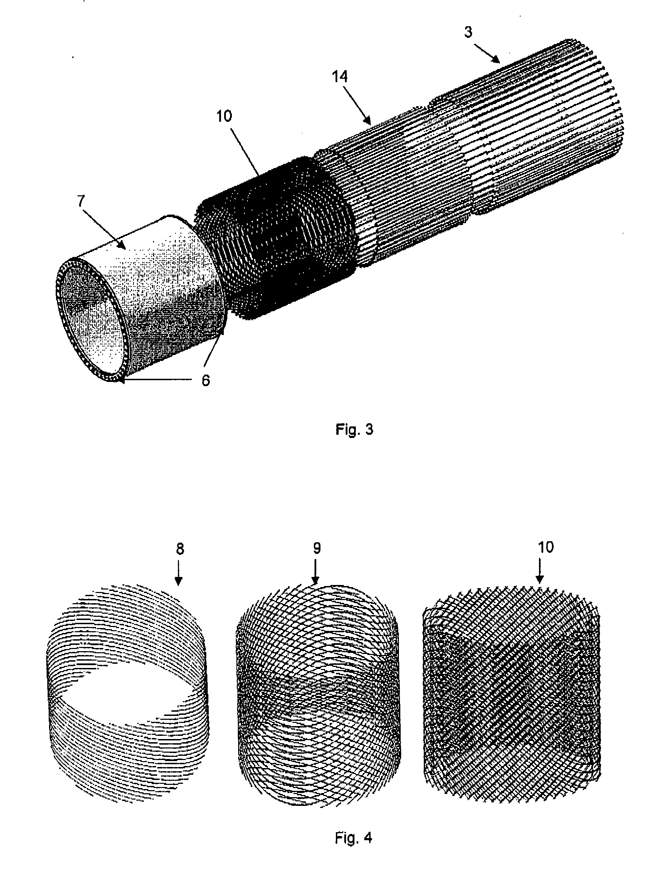

In Figure 3 the hidden parts of the extender (2) are also shown, i.e. two cylindrical tubes of biaxial tentor steel reinforcement grids (10) and a number of plastic tubes (14). A number of stud bolts (3) are also shown.

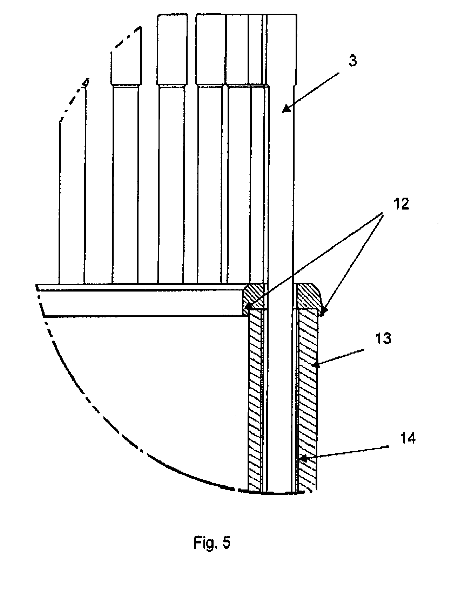

The plastic tubes (14) ensure that holes for the stud bolts exist in the densit casting. The plastic tubes remain in the final cast structure, see figure 5. The number of plastic tubes corresponds to the number of stud bolts.

The two metallic end flanges (6) are used as load redistribution flanges and ensure that the inner and outer diameters of the extender fit to the blade and the blade bearing geometry. Furthermore the flanges have two shoulders (12) which are used to protect the ends of the densit such that the material at the ends of the densit cylinder (7) is not so prone to cracking, see figure 5. The extender may also be made without the end flanges.

The hollow cylinder is cast using a suitable mould which is used to locate the top and bottom metallic flanges and the reinforcement grids (8-10). Also the plastic tubes (14) are positioned by the mould. The plastic tubes (14) may remain embedded in the final part or may remain in the mould.

The extender (2) may be held together with a few additional long bolts (not shown), which are clamping both the end flanges or by bolts screwed into dowels embedded in the concrete. The bolts should be countersunk which facilitates a machining of the end flanges to ensure parallelism of the two end flanges.

The blade pitch moment leads to torsion in the extender. Therefore it may be necessary to reinforce the concrete, fibre reinforced concrete or densit with for instance a biaxial tentor steel reinforcement (10). The reinforcement is embedded in the concrete/densit. Several options for reinforcing the cylinder exist. In Figure 4 three different examples of reinforcements are shown: one unidirectional reinforcement (discrete bars) cylinder (8), two separated unidirectional cylinders (discrete bars) (9) and two biaxial welded grid reinforcement cylinders (10). Also a single solid cylinder (not shown) may be used for reinforcement.

The complete extender assembly, comprising the blade root (1), extender (2), pitch system parts and blade bearing (4), is assembled using a number of long stud bolts (3) and nuts in the following way: first the stud bolts (3) are screwed into the blade root (1) (blade root inserts or a blade root flange). Subsequently the extender (2) is mounted by sliding it along the bolts. Then the blade bearing is mounted on the bolts and finally the pitch system parts are mounted and the whole assembly is fixed using nuts on the stud bolts. Subsequently the complete extender is mounted on the rotor hub (5) via the fixed blade bearing ring and blade bearing-hub bolts. The assembling of the complete extender assembly to the rotor may take place on the ground or when the hub (5) is installed on the main shaft of the nacelle on the tower.

The stud bolts (3) are to be preloaded during installation using a hydraulic tensioner.

## Claims

1. Blade root extender (2) for a WT, with cylindrical form and hollow, mounted between a blade root and a hub and fixed to said part by means of stud bolts (3), **characterised by** being made of a concrete body and at least one end flange (6) which is preloaded by stud bolts (3) compressing the blade root extender between the blade and the hub.

2. Blade root extender (2) for a WT according to claim 1 **characterised in that** the concrete extender (2) is reinforced by discrete bars (tentor steel), grids of tentor steel (8, 9, and 10) or short fibre reinforcements.

3. Blade root extender (2) for a WT according claim 1 **characterised in that** the concrete body has internal holes defined by hollow tubes made of plastic (14) which extends from one end flange to the other.

4. Blade root extender (2) for a WT according claim 1 **characterised in that** one of the end flanges have additional holes allowing the concrete /densit to be filled into the void in the mould when the structure is cast.

5. Blade root extender (2) for a WT according claim 1 **characterised in that** the end flange(s) for load distribution (6) have two shoulders (12) which surround and overlaps the inner and outer perimeter at the end of the concrete body (7).

6. Blade root extender (2) for a WT according claim 1 **characterised in that** the concrete body (7) is made of either concrete, fibre reinforced concrete, densit or short fibre reinforced densit material.
